# EUROPEAN PATENT APPLICATION

(11) **EP 4 732 713 A1**
(43) Date of publication of application: **29.04.2026**
(21) Application number: 24208686.6
(22) Date of filing: 24.10.2024
(51) Int. Cl.: A47B 9/20

(54) **GLIDE BEARING DEVICE FOR A HEIGHT ADJUSTABLE COLUMN AND HEIGHT ADJUSTABLE COLUMN**

(71) Applicant: Rol Ergo AB, 555 93 Jönköping (SE)
(72) Inventor: Dahlberg, Fredrik, 555 93 Jönköping (SE)
(74) Representative: AWA Sweden AB

(57) **Abstract**

The present invention relates to a glide bearing device (11) for a height adjustable column (1) having an inner tube and an outer tube, telescopically moveable relative to each other along a longitudinal direction (Ld), the glide bearing device (11) comprising: a first member (110) comprising a first surface (1101), wherein a portion (11010) of the first surface (1101) is disposed at an angle relative (A1) the longitudinal direction (Ld), and a second surface (1100) configured to be attached to an outer surface of the inner tube or to an inner surface of the outer tube; and a second member (111) comprising a first surface (1111) configured to abut the first surface (1101) of the first member (110), wherein a portion (11110) of the first surface (1111) of the second member (111) is disposed at an angle (A2) relative the longitudinal direction (Ld), and a second surface (1110) configured to abut the inner surface of the outer tube or the outer surface of the inner tube, wherein the first member (110) and the second member (111) are configured to be moveable relative to each other along the longitudinal direction (Ld), and wherein the portions (11010, 11110) disposed at an angle relative the longitudinal direction (Ld) causes a thickness (Ta, Tb) of the glide bearing device (11) in a direction transversal to the longitudinal direction (Ld) to be adjustable when the first member (110) and the second member (111) move relative to each other along the longitudinal direction (Ld).

## Description

### Technical Field

The present disclosure relates to a glide bearing device, specifically a glide bearing device having an adjustable thickness.

### Background

Presently, height adjustable columns are well known and used in height adjustable furniture, often in height adjustable tables. The height adjustable columns, often telescopic columns, commonly comprise axially adjustable tubes. The tubes are telescopically adjustable in relation to each other, and the columns are stabilized laterally by using various means.

Usually, the stabilizing means, such as glide bearing devices, are statically attached to at least one of the overlapping tube parts of the column, at a surface side adjacent between two overlapping tube parts and comprise plastic "studs" or other means for stabilizing the space between two tubes. The stabilizing means are then providing a "two-point" stabilization. Stabilizing points or means may then also function as bearings for the telescopic column when the column is raised or lowered.

Manufacturing tubes for height adjustable columns can result in tubes having slightly different dimensions, causing space variations between each pair of tubes and leading to stabilizing means needing to have a size specifically fitted to each pair of tubes.

One solution to this have been to mill tubes such that the stabilizing means is properly fitted between two tubes. Another solution is to have different sizes of stabilizing means, measure the space between two tubes, find a suitable size of stabilizing means and arrange it between the two tubes.

However, these are costly and time-consuming processes. Consequently, improved stabilization means are needed to simplify the manufacturing process.

### Summary

It is an object of the present invention to provide an improved solution that alleviates the mentioned drawbacks with present devices. Furthermore, it is an object to provide a glide bearing device providing a simplified manufacturing process.

The invention is defined by the appended independent claims, with embodiments being set forth in the appended dependent claims, in the following description and in the drawings.

According to a first aspect of the invention, there is provided a glide bearing device for an adjustable column having an inner tube telescopically arranged inside an outer tube, telescopically moveable relative to each other along a longitudinal direction. The glide bearing device comprises a first member. The first member comprises a first surface. A portion of the first surface is disposed at an angle relative the longitudinal direction. The first member comprises a second surface configured to be attached to an outer surface of the inner tube or to an inner surface of the outer tube. The glide bearing device comprises a second member. The second member comprises a first surface configured to abut the first surface of the first member. A portion of the first surface of the second member is disposed at an angle relative the longitudinal direction. The second member comprises a second surface configured to abut the inner surface of the outer tube or the outer surface of the inner tube. The first member and the second member are configured to be moveable relative to each other along the longitudinal direction. The portions disposed at an angle relative the longitudinal direction causes a thickness of the glide bearing device in a direction transversal to the longitudinal direction to be adjustable when the first member and the second member move relative to each other along the longitudinal direction.

By providing a glide bearing device with an adjustable thickness, the glide bearing device may stabilize tubes having different dimensions, without the need to fit each glide bearing device to each pair of tubes during the manufacturing process. The adjustable glide bearing device may be suitable for both size variations between different tubes caused during the manufacturing process, and size variation existing in a single tube. Thus, only one size of glide bearing device is needed during the manufacturing process of the adjustable column, such as a height adjustable column. The glide bearing device may adjust itself as soon as movement of the two tubes relative to each other is initiated. Both cost and time is saved by avoiding fitting a specific size of glide bearing device for each pair of tubes, or milling the tube to fit a glide bearing device for each pair of tubes.

When the first and second members move relative each other, the portions disposed at an angle relative the longitudinal direction may cause the first and second members to move away from each other or towards each other in the direction transversal to the longitudinal direction, while the members still abuts each other. The angle relative the longitudinal direction of the first surface of the first member and the angle relative the longitudinal direction of the first surface of the second member may be the same or substantially the same angle.

When the glide bearing device is arranged inside a height adjustable column, the inner surface of the outer tube and the outer surface of the inner tube may push the members toward each other if the distance between the inner surface of the outer tube and the outer surface of the inner tube is smaller than the thickness of the glide bearing device. The inner surface of the outer tube and the outer surface of the inner tube may enable the members of the glide bearing device to move away from each other if the distance between the inner surface of the outer tube and the outer surface of the inner tube is larger than the thickness of the glide bearing device. This may cause the thickness of the glide bearing device to be adjustable inside the height adjustable column.

The second surface of the first member is attached to one of the surfaces of the tubes, and the second surface of the second member abuts the other one of the two surfaces of the tubes, i.e. out of the outer surface of the inner tube and the inner surface of the outer tube. The second surface of the second member may thereby glide relative to the surface of one of the tubes which it abuts. The glide properties between the second surface of the second member, such as frictional properties, may provide a suitable functionality causing the second member to move along with the tube when the gap between the tubes is larger than the thickness of the glide bearing device. Such movement of the second member along with the tube which it abuts may cause a movement of the second member relative to the first member, causing the thickness of the glide bearing device to increase due to the engagement between the first surfaces of the first and second members. When such movement has caused the thickness of the glide bearing device to be substantially equal to the gap between the inner and outer tubes, the engagement force between the first surfaces may be larger than the frictional force between the second surface of the second member and the surface of the tube which it abuts. The result may then be a suitably sized glide bearing device for the particular set of tubes in which it is installed.

The glide bearing device may be configured to be arranged between the inner and the outer tube of the telescopic column, at a position at a distance from a longitudinal end of the outer tube and/or the inner tube. Alternatively, the glide bearing device may be configured to be arranged at a longitudinal end of the outer tube or the inner tube. A telescopic column may be provided with one two or more glide bearing devices, arranged at a longitudinal distance to each other. One of the glide bearing device may be arranged at a longitudinal end of the outer tube.

The longitudinal direction may be the same as the direction of which the height adjustable columns may be able to extend and retract. The direction transversal to the longitudinal direction may extend radially from a center of the height adjustable column towards the outer tube.

The first surfaces may have a coefficient of friction between each other such that the first and second members lock into a position relative each other when a distance between the inner surface of the outer tube and the outer surface of the inner tube is smaller or equal to the thickness of the glide bearing device.

The coefficient of friction between the first surfaces may ensure that the members do not slide away from each other and may ensure that the thickness of the glide bearing device is not adjusted when not needed.

The coefficient of friction may relate to a coefficient of friction between the second surface of the second member and the surface of the tube which it is configured to abut. A higher coefficient of friction may be desired between the first surfaces than between the second surface of the second member and the surface of the tube which it is configured to abut.

By "a distance between the inner surface of the outer tube and the outer surface of the inner tube being smaller or equal to the thickness of the glide bearing device" it may be meant that the distance is substantially equal to or slightly smaller than the thickness of the glide bearing device, such that the distance is +/- about 5 mm, preferably +/- about 4 mm, +/- about 3 mm, +/- about 2 mm, +/- about 1 mm, +/- about 0.5 mm, +/- about 0.25 mm, +/about 0.1 mm, or the same as the thickness of the glide bearing device.

Each of the first surfaces may comprise a plurality of ribs extending in a second direction transversal to the longitudinal direction.

The ribs may provide a coefficient of friction between the first surfaces such that the first and second members lock into a position relative each other when the distance between the inner surface of the outer tube and the outer surface of the inner tube is smaller or equal to the thickness of the glide bearing device.

The second direction transversal to the longitudinal direction may be transversal to the direction of the thickness of the glide bearing device.

The first surfaces may be formed out of rubber or plastic.

The material of the first surfaces may provide a coefficient of friction between the first surfaces such that the first and second members lock into a position relative each other when a distance between the inner surface of the outer tube and the outer surface of the inner tube is smaller or equal to the thickness of the glide bearing device.

The first surfaces may be formed out of the same material, or the first surfaces may be formed out of different materials.

The second surfaces may be curved, bent or flat.

The shape of the second surfaces may be configured to be fitted towards differently shaped tubes. For example, flat second surfaces may be preferred when the tubes are rectangular and curved second surfaces may be preferred when the tubes are cylinder shaped. Depending on the size of the glide bearing device and the tubes, flat second surfaces may be used also for cylinder shaped tubes.

The first member may comprise a fastening portion arranged on the second surface. The fastening portion may be configured to be fastened to the inner tube or to the outer tube.

One of the first and second member may be arranged in a fixed manner to one of the inner tube and the outer tube. The non-fixed member, with a second surface in contact with e.g. the inner surface of the outer tube, may move relative to the outer tube when inner and outer tubes are moved relative to each other and the first and second members are adjusted such that they do not move relative to each other.

The second surface of the second member may comprise a groove extending in the longitudinal direction.

Providing a groove of the second surface of the second member may facilitate the use of the glide bearing device when three or more tubes are used in a height adjustable column. A first glide bearing device may be arranged between a first tube and a second tube, the second tube being arranged inside the first tube. The fastening portion of the first glide bearing device may be attached to the second tube by extending through the tube. If a third tube is arranged inside the second tube and a second glide bearing device is arranged between the second tube and the third tube, the fastening portion of the first glide bearing device may touch the second glide bearing device. This may cause instability of the height adjustable column and may prevent the glide bearing devices to function properly. The second member of the second glide bearing device comprising a groove may ensure that above-mentioned situation is avoided.

Each of the first surfaces may comprise at least one V-shaped portion.

The first surfaces comprising V-shaped portions may enable the members of the glide bearing device to move in two directions in relation to each other along the longitudinal direction, causing the thickness of the glide bearing device to be adjustable both when retracting the height adjustable column and extending the height adjustable column.

The first surfaces comprising V-shaped portions may ensure that the members of the glide bearing device do not fall apart from each other when arranged inside a height adjustable column.

By "V-shaped portion" it may be meant two portions disposed at an angle relative the longitudinal direction of each of the first surfaces such that the two portions of respective first surface converge at an angle. The angle may be about 178 degrees, preferably about 175 degrees, about 170 degrees, about 160 degrees, about 155 degrees, about 152 degrees, about 150 degrees, about 140 degrees, about 130 degrees, about 120 degrees, about 110 degrees, or about 100 degrees.

The V-shaped portion of the first member may be a concave, V-shaped portion and the V-shape of the second member may be a convex, V-shaped portion, and the V-shaped portions of the first surfaces may be configured to abut each other. The V-shaped portion of the first member may be a convex, V-shaped portion and the V-shaped portion of the second member may be a concave, V-shaped portion, and the V-shaped portions of the first surfaces may be configured to abut each other.

The concave, V-shaped portion of the first member and the convex, V-shaped portion of the second member may enable the first and second members to move away from each other and towards each other while still abutting each other, causing the thickness of the glide bearing device to be adjustable.

The convex, V-shaped portion of the first member and the concave, V-shaped portion of the second member may enable the first and second members to move away from each other and towards each other while still abutting each other, causing the thickness of the glide bearing device to be adjustable.

The at least one V-shaped portion of each of the first surfaces may be a plurality of V-shaped portions of each of the first surfaces.

A plurality of V-shaped portions on the first surfaces may increase the stability between the first and second members, and thereby increase the stability between the telescopic tubes.

The first member may be configured to be attached to an edge of the outer tube.

By providing the first member on an edge of the outer tube, the glide bearing device may further stabilize the adjustable column when the adjustable column is in a retracted position. The member out of the first and second members configured to be arranged on the outer tube may be arranged on a collar configured to be arranged to the circumference of a longitudinal end of the outer tube. The member arranged on the collar may be formed as an integrated portion of the collar. The collar may extend around the whole circumference of the outer tube. If the tubes are rectangular, the member arranged to the collar may be arranged at a corner of the outer tube.

According to a second aspect of the invention, there is provided a system for a height adjustable column having an inner tube telescopically arranged inside an outer tube, telescopically moveable relative to each other along a longitudinal direction. The system comprises a collar configured to be arranged to a circumference of a longitudinal end of the outer tube. The system comprises at least one glide bearing device. The first member of the at least one glide bearing device is arranged on the collar.

Arranging the system on a longitudinal end of the outer tube may further stabilize the adjustable column when the adjustable column is in a retracted position. A glide bearing device at an end of the outer tube may be combined with at least one glide bearing device arranged between the inner and outer tube distal from the end of the outer tube. By having a glide bearing device being part of a collar at the end of the outer tube, it may be enough with one glide bearing device arranged between the tubes distal to the end of the outer tube, while otherwise two such distal glide bearing devices normally may be needed, arranged at a distance between each other.

The first member on the collar, and the second member, may each comprise first surfaces having at least one V-shaped portion, which at least one V-shaped portion may be disposed at an angle relative to the longitudinal direction.

The first surface of the first member on the collar may comprise a portion disposed at an angle relative to the longitudinal direction, wherein said angle provides that said portion is closer to the inner tube at an end of the portion being adjacent to the longitudinal end of the outer tube than at an end of the portion being distal from the longitudinal end of the outer tube. When the second member is moved relative to the first member, such that the second member moves closer to the longitudinal end of the outer tube, thickness of the glide bearing device may increase.

The second surface of the first member may be attached to the inner surface of the outer tube via the collar.

The collar may extend around the whole circumference of the outer tube.

The first member of the at least one glide bearing device may be integrated to the collar. Integrating the first members to the collar may simplify the manufacturing process, saving time and cost.

The at least one glide bearing device may be a plurality of glide bearing devices. All of the plurality of glide bearing devices may have first members being part of the collar.

A system having a plurality of glide bearing devices may provide stabilization on multiple sides of the height adjustable column.

If the tubes are, for example, polygon shaped, such as triangular shaped or rectangular shaped, the plurality of first members arranged on the collar may be configured to be arranged at corners of the outer tube.

If the tubes are rectangular shaped, the plurality of glide bearing devices may be four glide bearing devices or at least four glide bearing devices, wherein each first member may be configured to be arranged at respective corner of the outer tube. Similarly, if the tubes are triangular shaped, the plurality of glide bearing devices may be three or at least three glide bearing devices, if the tubes are octagon shaped, the plurality of glide bearing devices may be eight or at least eight glide bearing devices, etc.

Each second member may be configured to abut respective corner of the inner tube. Each second surface of the second members may be configured to abut respective corner of the inner tube.

The first member on the collar, and the second member, may each comprise first surfaces having at least one V-shaped portion, which at least one V-shaped portion may be disposed at an angle relative to the longitudinal direction. The first surface of the first member may further have an additional V-shape in a direction transversal to the longitudinal direction. Further, the first surface and the second surface of the second member may have an additional V-shape in a direction transversal to the longitudinal direction. The second surface of the second member may be configured to abut a corner of the inner tube, and the additional V-shape may be configured to conform to the shape of the corner of the inner tube. The same shape of the corner may be reflected in the additional V-shapes of the first surface of the second member and the first surface of the first member, in order to enable arrangement of the glide bearing device at a corner of the tubes. The same applies if the tubes are cylindrical in which case the first and second members may, instead of V-shapes in a direction transversal to the longitudinal direction, have concave and convex shapes at the corresponding surfaces, which shapes matches the cylindrical shape of the inner tube.

According to a third aspect of the invention, there is provided a height adjustable column comprising an outer tube and an inner tube arranged inside the outer tube. The outer tube and the inner tube are telescopically moveable relative to each other along a longitudinal direction. The height adjustable column comprises a glide bearing device or a system for a height adjustable column.

### Brief Description of the Drawing

The invention will in the following be described in more detail with reference to the enclosed drawings, wherein:
Figs. 1a-1b show side views of a height adjustable column according to an embodiment.
Fig. 2 shows a section view of a height adjustable column according to an embodiment.
Fig. 3a shows a perspective view of a glide bearing device according to an embodiment.
Fig. 3b shows a perspective view of a first member of a glide bearing device according to an embodiment.
Fig. 3c shows a perspective view of a second member of a glide bearing device according to an embodiment.
Fig. 4a shows a perspective view of a first member of a glide bearing device according to an embodiment.
Fig. 4b shows a perspective view of a second member of a glide bearing device.
Fig. 5a-5b show cross sectional side views of a glide bearing device according to an embodiment.
Fig. 6a shows a perspective view of a system for a height adjustable column according to an embodiment.
Fig. 6b shows a perspective view of a plurality of first members and a collar of a system for a height adjustable column according to an embodiment.
Figs. 7a-7c show perspective views of a second member of a glide bearing device according to an embodiment.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

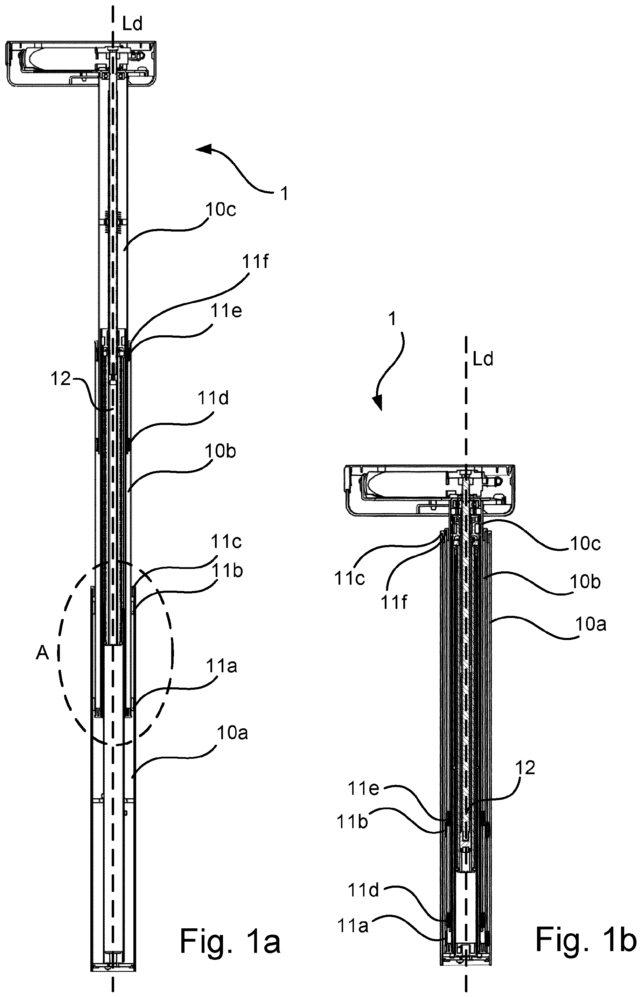

Figs. 1a-1b illustrates side views of a height adjustable column 1. The height adjustable column 1 may comprise a first and a second tube 10a, 10b. The first tube 10a may be an outer tube and the second tube 10b may be an inner tube. Alternatively, as shown in figs. 1a-1b, the height adjustable column may comprise a first, a second and a third tube 10a, 10b, 10c. The first tube 10a may be an outer tube, the second tube 10b may be a middle tube, and the third tube 10c may be an inner tube.

The second tube 10b may be telescopically arranged inside the first tube 10a. The second tube 10b and the first tube 10a may be telescopically moveable relative to each other along a longitudinal direction Ld. The third tube 10c may be telescopically arranged inside the second tube 10b. The second tube 10b and the third tube 10c may be telescopically moveable relative to each other along the longitudinal direction Ld. The height adjustable column may further comprise a fourth tube (not shown) telescopically arranged inside the third tube 10c. The fourth tube may be telescopically moveable relative the third tube along the longitudinal direction Ld.

A driving arrangement 12 may be configured to retract and extend the height adjustable column 1. The height adjustable column 1 is shown in an extended position in fig. 1a and in a retracted position in fig. 1b. The height adjustable column may extend and retract along the longitudinal direction Ld.

The height adjustable column 1 may be a height adjustable table leg. The height adjustable column 1 may be configured to be attached to a tabletop. The height adjustable column 1 may be cylinder shaped or rectangular shaped.

The height adjustable column 1 comprises a glide bearing device 11a, 11b, 11c, 11d, 11e, 11f. In figs. 1a-1b, the height adjustable column 1 is illustrated as comprising a plurality of glide bearing devices 11a, 11b, 11c, 11d, 11e, 11f, however, the height adjustable column 1 may comprise a single glide bearing device 11a, 11b, 11c, 11d, 11e, 11f. Glide bearing devices 11a, 11b, 11c, 11d, 11e, 11f may be arranged between an inner surface of the first tube 10a and an outer surface of the second tube 10b. Glide bearing devices 11a, 11b, 11c, 11d, 11e, 11f may be arranged between an inner surface of the second tube 10b and an outer surface of the third tube 10c.

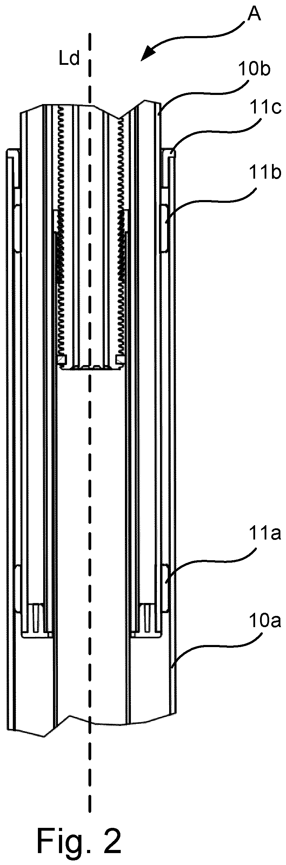

The position of the glide bearing devices 11a, 11b, 11c arranged between the first tube 10a and the second tube 10b is illustrated in detail in fig. 2. A section view A is illustrated in fig. 2.

A glide bearing device 11c may be attached to an edge of the first tube 10a. A glide bearing device 11a, 11b, 11c may be attached to the inner surface of the first tube 10a. A glide bearing device 11b, 11c may be attached to the outer surface of the second tube 10b.

If the glide bearing device 11c is attached to the edge of the first tube 10a and the inner surface of the first tube 10a, the glide bearing device 11c may abut the outer surface of the second tube 10b. If the glide bearing device 11a, 11b, 11c is attached to the inner surface of the first tube 10a, the glide bearing device 11a, 11b, 11c may abut the outer surface of the second tube 10b. If the glide bearing device 11b, 11c is attached to the outer surface of the second tube 10b, the glide bearing device 11b, 11c may abut the inner surface of the first tube 10a.

The outer and inner tube referred to in the following text may be the first and second tube 10a, 10b, the second and third tube 10b, 10c, or any tubes in the height adjustable column 1 wherein the inner tube is telescopically arranged inside the outer tube and the tubes are telescopically movable relative each other along the longitudinal direction Ld.

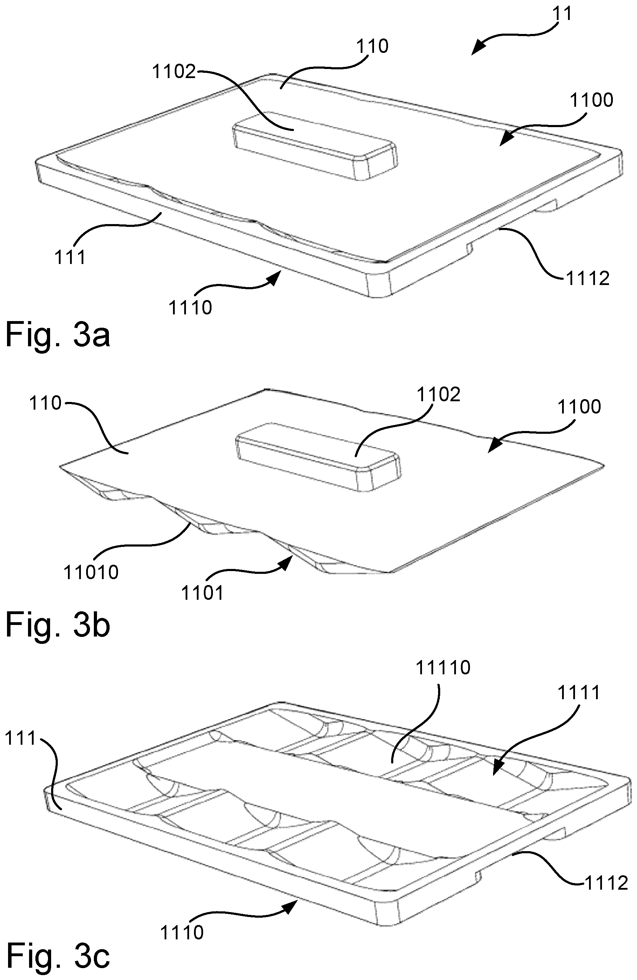

An embodiment of the glide bearing device 11 is shown in detail in figs 3a-4b.

Fig. 3a illustrates the glide bearing device 11, comprising a first member 110 and a second member 111.

Fig. 3b illustrates the first member 110 and fig. 3c illustrate the second member 111.

The first member 110 comprises a first surface 1101 and a second surface 1100, as shown in fig. 3b. The first surface 1101 of the first member 110 may be disposed on an opposite side of the first member 110 relative the second surface 1100 of the first member 110.

The second member 111 comprises a first surface 1111 and a second surface 1110, as shown in fig. 3c. The first surface 1111 of the second member 111 may be disposed on an opposite side of the second member 111 relative the second surface 1110 of the second member 111.

The first surfaces 1101, 1111 are configured to abut each other.

The second surface 1100 of the first member 110 is configured to be attached to the outer surface of the inner tube or to the inner surface of the outer tube. The second surface 1110 of the second member 111 is configured to abut the outer surface of the inner tube or to abut the inner surface of the outer tube.

The glide bearing device 11 illustrated in fig. 3a is rectangular shaped, however the glide bearing device 11 may be, for example, circular or cylinder shaped. The second surfaces 1100, 1110 are illustrated as flat in fig 3a-4b, however the second surfaces may be curved, double-curved, concave or convex.

The first member 110 may comprise a fastening portion 1102 arranged on the second surface 1100. The fastening portion 1102 may be configured to be fastened to the inner tube or to the outer tube. The fastening portion 1102 may be configured to be attached to the inner surface of the outer tube or the outer surface of the inner tube. The fastening portion 1102 may be configured to be attached to a hole of the outer tube or to a hole of the inner tube. The fastening portion 1102 is illustrated as rectangular shaped in fig. 3a and fig. 3b. Alternatively, the fastening portion 1102 may be, for example, circular shaped, square shaped or S-shaped.

An alternative way of attaching the first member 110 to the inner surface of the outer tube or to the outer surface of the inner tube is to bind the second surface 1100 of the first member 110 with a binding material, such as resin or glue, to the inner surface of the outer tube or to the outer surface of the inner tube. A binding material may be arranged on the second surface 1100 of the first member 110.

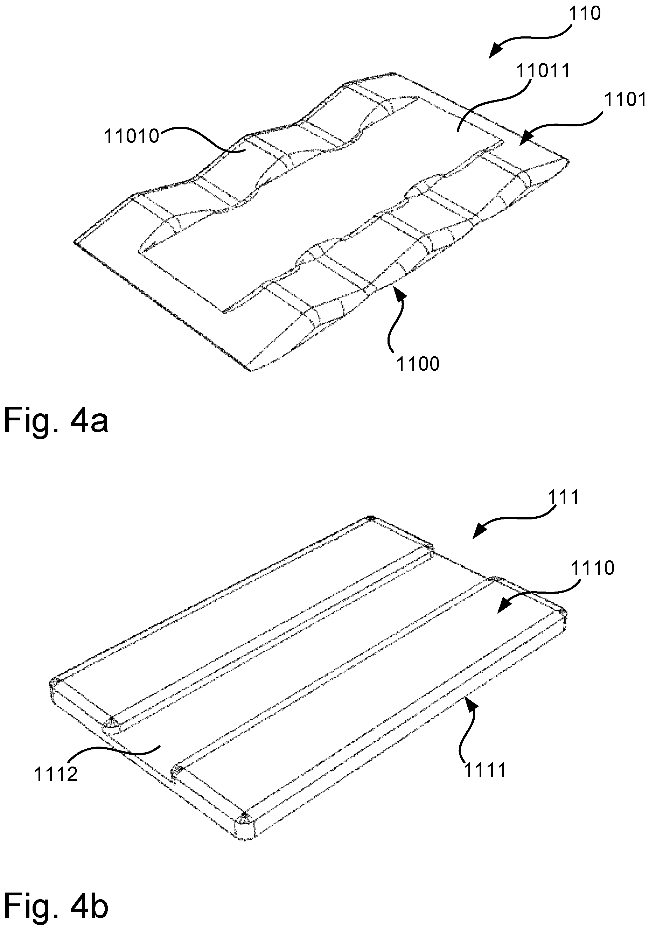

Fig. 4b illustrate the second surface 1110 of the second member 111. The second surface 1110 of the second member 111 may comprise a groove 1112, as shown in fig. 4b. The groove 1112 may extend in the longitudinal direction Ld. The groove 1112 may have a width. The width of the groove 1112 may be the same size as the width of the fastening portion 1102. The width of the groove 1112 may be larger than the width of the fastening portion 1102. The width of the groove 1112 and width the fastening portion 1102 may be transversal to the longitudinal direction.

Fig. 4a illustrate the first surface 1101 of the first member 110. The first surface 1101 of the first member 110 may comprise a groove 11011. The groove 11011 of the first member 110 may have a width which is the same size or larger than the width of the groove 1112 of the second member 111.

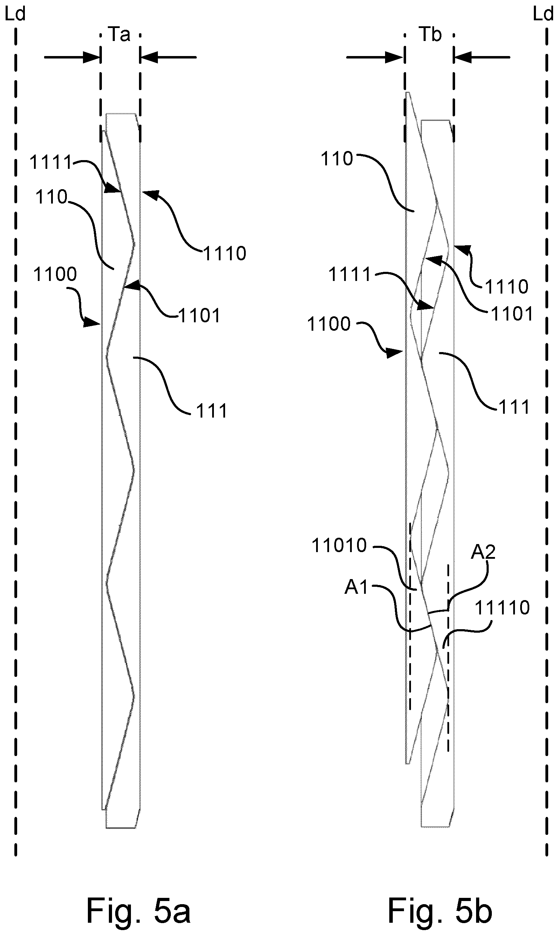

Figs. 5a-5b schematically illustrate side views of the glide bearing device 11.

A portion 11010 of the first surface of the first member 110 is disposed at an angle A1 relative the longitudinal direction Ld, as shown in figs. 5a-5b. A portion 11110 of the first surface of the second member 111 is disposed at an angle A2 relative the longitudinal direction Ld, as shown in figs. 5a-5b.

The angle A1 of the first member may be about 10 degrees, preferably about 20 degrees, about 30 degrees, about 40 degrees, about 50 degrees, or about 60 degrees. The angle A2 of the second member may be about 10 degrees, preferably about 20 degrees, about 30 degrees, about 40 degrees, about 50 degrees, or about 60 degrees. The angles A1, A2 may the same angle.

The first and second members 110, 111 are configured to be moveable relative to each other along the longitudinal direction Ld. The portions 11010, 11110 disposed at an angle A1, A2 relative the longitudinal direction Ld causes a thickness Ta, Tb of the glide bearing device 11 in a direction transversal to the longitudinal direction Ld to be adjustable when the first member 110 and the second member 111 move relative to each other along the longitudinal direction Ld.

Figs. 5a-5b illustrate the adjustable thickness Ta, Tb of the glide bearing device 11. Before the first member 110 and the second member 111 move relative each other along the longitudinal direction Ld, the glide bearing device 11 may have a first thickness Ta. After the first member 110 and the second member 111 have moved relative each other along the longitudinal direction Ld, the glide bearing device 11 may have a second thickness Tb.

Each of the portions 11010, 11110 disposed at an angle A1, A2 of the first surfaces 1101, 1111 may be one single portion of each first surface 1101, 1111 disposed at an angle A1, A2 relative the longitudinal direction Ld.

Each of the first surfaces 1101, 1111 may comprise a V-shaped portion. Each of the first surfaces 1101, 1111 may comprise a plurality of V-shaped portions, as illustrated in figs. 5a-5b.

The V-shaped portions may be concave, V-shaped and/or convex, V-shaped. In figs. 5a-5b, the first and second members 110, 111 are shown each comprising both convex and concave, V-shaped portions. Alternatively, the first surface 1101 of the first member 110 may comprise a single concave, V-shaped portion and the first surface 1111 of the second member 111 may comprise a single convex, V-shaped portion, or vice versa. The V-shaped portion of the first member 110 may be configured to abut the V-shaped portion of the second member 111.

The first surfaces 1101, 1111 may have a coefficient of friction between each other such that the first and second members 110, 111 lock into position relative each other when a distance between the inner surface of the outer tube and the outer surface of the inner tube is smaller or equal to the thickness Ta, Tb of the glide bearing device 11.

The coefficient of friction may relate to a coefficient of friction between the second surface of the second member and the surface of the tube which it is configured to abut. A higher coefficient of friction may be desired between the first surfaces than between the second surface of the second member and the surface of the tube which it is configured to abut.

The first surfaces 1101, 1111 may be formed out of rubber or plastics. The material of the first surfaces 1101, 1111 may provide a coefficient of friction such that the first and second members 110, 111 lock into position when the distance between the inner surface of the outer tube and the outer surface of the inner tube is smaller or equal to the thickness Ta, Tb of the glide bearing device 11.

The first surfaces 1101, 1111 may comprise ribs extending in a direction transversal to the longitudinal direction Ld. The ribs of the first surfaces 1101, 1111 may provide a coefficient of friction such that the first and second members 110, 111 lock into position when the distance between the inner surface of the outer tube and the outer surface of the inner tube is smaller or equal to the thickness Ta, Tb of the glide bearing device 11.

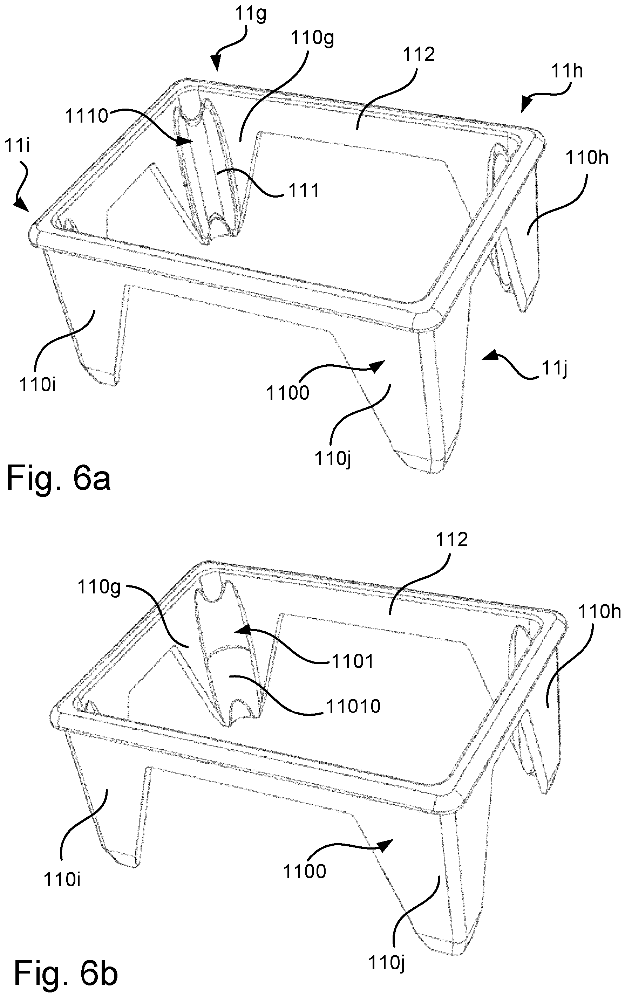

A system for a height adjustable column 1 is illustrated in fig. 6a. The system comprises at least one glide bearing device 11g, 11h, 11i, 11j. In fig. 6a, the system is illustrated as comprising a plurality of glide bearing devices 11g, 11h, 11i, 11j. Fig. 6b illustrates the first members 110g, 110h, 110i, 110j of the plurality of glide bearing devices 11g, 11h, 11i, 11j.

The system may be an end stop at the end of an outer tube.

The first member 110g, 110h, 110i, 110j of the at least one glide bearing device 11g, 11h, 11i, 11j is arranged on a collar 112. The collar 112 is configured to be arranged to a circumference of a longitudinal end of the outer tube.

The collar 112 may be, for example, rectangular shaped as illustrated, or circular shaped. The collar 112 may be formed out of, for example, rubber or plastics.

The first member 110g, 110h, 110i, 110j of the at least one glide bearing device 11g, 11h, 11i, 11j may be integrated to the collar 112.

The first surface 1101 of the first member 110g, 110h, 110i, 110j may be concave or convex.

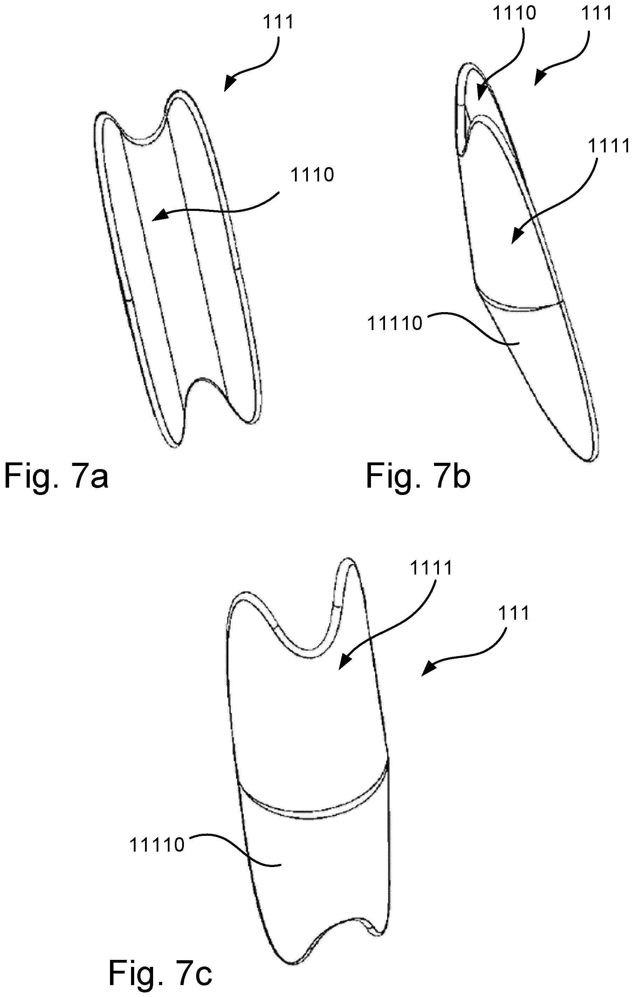

An embodiment of a second member 111 is illustrated in figs. 7a-7c.

The first surface 1111 of the second member 111 may be concave or convex.

Correspondingly as discussed above for the embodiments in figs. 3-5, the embodiment wherein the first member 110g, 110h, 110i, 110j is part of a collar 112 provides a function of an adjustable thickness of the glide bearing device 11g, 11h, 11i, 11j when the first member 110g, 110h, 110i, 110j and the second member 111 move relative to each other following a movement of the inner and outer tubes relative to each other. The glide bearing device 11g, 11h, 11i, 11j at the end of the outer tube may thereby provide an adjusting glide bearing device also at an end portion of the outer tube.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A glide bearing device (11) for a height adjustable column (1) having an inner tube telescopically arranged inside an outer tube, telescopically moveable relative to each other along a longitudinal direction (Ld), the glide bearing device (11) comprising:
a first member (110) comprising
a first surface (1101), wherein a portion (11010) of the first surface (1101) is disposed at an angle relative (A1) the longitudinal direction (Ld), and
a second surface (1100) configured to be attached to an outer surface of the inner tube or to an inner surface of the outer tube; and
a second member (111) comprising
a first surface (1111) configured to abut the first surface (1101) of the first member (110), wherein a portion (11110) of the first surface (1111) of the second member (111) is disposed at an angle (A2) relative the longitudinal direction (Ld), and
a second surface (1110) configured to abut the inner surface of the outer tube or the outer surface of the inner tube,
wherein the first member (110) and the second member (111) are configured to be moveable relative to each other along the longitudinal direction (Ld), and
wherein the portions (11010, 11110) disposed at an angle relative the longitudinal direction (Ld) causes a thickness (Ta, Tb) of the glide bearing device (11) in a direction transversal to the longitudinal direction (Ld) to be adjustable when the first member (110) and the second member (111) move relative to each other along the longitudinal direction (Ld).

2. The glide bearing device (11) according to claim 1, wherein the first surfaces (1101, 1111) have a coefficient of friction between each other such that the first and second members (110, 111) lock into a position relative each other when a distance between the inner surface of the outer tube and the outer surface of the inner tube is smaller or equal to the thickness (Ta, Tb) of the glide bearing device (11).

3. The glide bearing device (11) according to claim 1 or 2, wherein each of the first surfaces (1101, 1111) comprises a plurality of ribs extending in a second direction transversal to the longitudinal direction (Ld).

4. The glide bearing device (11) according to any of the preceding claims, wherein the first surfaces (1101, 1111) are formed out of rubber or plastic.

5. The glide bearing device (11) according to any one of the preceding claims, wherein the second surfaces (1100, 1110) are curved or flat.

6. The glide bearing device (11) according to any of the preceding claims, wherein the first member (110) comprises a fastening portion (1102) arranged on the second surface (1100) and the fastening portion (1102) is configured to be fastened to the inner tube or to the outer tube.

7. The glide bearing device (11) according to any of the preceding claims, wherein the second surface (1110) of the second member (111) comprises a groove (1112) extending in the longitudinal direction (Ld).

8. The glide bearing device (11) according to any of the preceding claims, wherein each of the first surfaces (1101, 1111) comprises at least one V-shaped portion.

9. The glide bearing device (11) according to claim 8, wherein the V-shaped portion of the first member (110) is a concave, V-shaped portion and the V-shape of the second member (111) is a convex, V-shaped portion, and the V-shaped portions of the first surfaces (1101, 1111) are configured to abut each other, or
wherein the V-shaped portion of the first member (110) is a convex, V-shaped portion and the V-shaped portion of the second member (111) is a concave, V-shaped portion, and the V-shaped portions of the first surfaces (1101, 1111) are configured to abut each other.

10. The glide bearing device (11) according to claim 8 or 9, wherein the at least one V-shaped portion of each of the first surfaces (1101, 1111) is a plurality of V-shaped portions of each of the first surfaces (1101, 1111).

11. The glide bearing device (11) according to any of the preceding claims, wherein the first member (110) is configured to be attached to an edge of the outer tube.

12. A system for a height adjustable column (1) having an inner tube telescopically arranged inside an outer tube, telescopically moveable relative to each other along a longitudinal direction (Ld), the system comprising
a collar (112) configured to be arranged to a circumference of a longitudinal end of the outer tube, and
at least one glide bearing device (11) according to any of the preceding claims, wherein the first member (110) of the at least one glide bearing device (11) is arranged on the collar (112).

13. The system according to claim 12, wherein the first member (110) of the at least one glide bearing device (11) is integrated to the collar (112).

14. The system according to claim 12 or 13, wherein the at least one glide bearing device (11) is a plurality of glide bearing devices (11).

15. A height adjustable column (1) comprising:
an outer tube,
an inner tube arranged inside the outer tube, wherein the outer tube and the inner tube are telescopically moveable relative to each other along a longitudinal direction, and
a glide bearing device (11) according to any of claim 1 - 11 or
a system according to any of claim 12 - 14.
